Europäisches Patentamt

European Patent Office

Office européen des brevets

(19)

(11) Publication number: **0 164 649**
**B1**

# (12) EUROPEAN PATENT SPECIFICATION

(45) Date of publication of patent specification: **10.08.88**

(21) Application number: **85106601.9**

(22) Date of filing: **29.05.85**

(51) Int. Cl.⁴: **B 65 G 15/20,** B 65 H 5/02,
B 07 C 1/10

(54) Envelope delivery device.

(30) Priority: **29.05.84 JP 110475/84**

(43) Date of publication of application:
**18.12.85 Bulletin 85/51**

(45) Publication of the grant of the patent:
**10.08.88 Bulletin 88/32**

(84) Designated Contracting States:
**AT BE CH DE FR GB IT LI LU NL SE**

(56) References cited:
**DE-A-2 628 889**
**GB-A-1 373 349**
**US-A-4 016 980**
**US-A-4 228 994**
**US-A-4 386 768**

(73) Proprietor: **OMRON TATEISI ELECTRONICS CO.**
**10, Tsuchido-cho Hanazono Ukyo-ku**
**Kyoto 616 (JP)**

(72) Inventor: **Takahashi, Kiyotaka c/o Omron**
**Tateisi El. Co.**
**Patent Center 20 Igadera**
**Shimokaiinji, Nagaokakyo-shi Kyoto 617 (JP)**
Inventor: **Arimoto, Kathukiko c/o Omron Tateisi**
**El. Co.**
**Patent Center 20 Igadera**
**Shimokaiinji, Nagaokakyo-shi Kyoto 617 (JP)**

(74) Representative: **WILHELMS, KILIAN & PARTNER**
**Patentanwälte**
**Eduard-Schmid-Strasse 2**
**D-8000 München 90 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a delivery device or a conveyer and, more particularly, to a device built within an envelope-depositing machine for carrying envelopes inserted into the machine to its accommodating box, said envelope-depositing machine being designed to process bank note, securities, cards, etc. in a state where they are enclosed in the envelopes, and being one of the automatic deposit machines or automated teller machines installed and used in financial facilities such as banks. It is herein to be understood that the wording "deposit envelope(s) refers to an envelope or envelopes (or the like) in which bank note, securities, cards and other materials to which some value is added is or are enclosed, and which are used to deposit their contents in the banking facilities.

The conventional deposit envelope delivery device includes upper and lower delivery belts arranged at a suitable interval. Deposit envelopes are carried, while they are sandwiched between the upper and lower delivery belts. Since the gap between the upper and lower delivery belts is fixed, there was a problem that such a device could only insufficiently cope with envelopes of varied thickness. That is, a problem arises that considerable difficulty is involved in allowing an envelope of a larger thickness to enter in between the upper and lower delivery belts. However, if the space between the upper and lower delivery belts is increased so as to make delivery of such a larger thicker envelope possible, reliable delivery of an envelope having a smaller thickness is then impossible due to the fact that it is not in contact with the upper delivery belt. In most cases, the deposit envelopes become irregular on the surfaces, although depending upon the state of the contents enclosed therein. Hence, when the space between the upper and lower belts was fixed, there was a problem that they only partly contacted the irregular surfaces of the deposit envelopes, resulting in unstable delivery thereof.

A handling machine according to the preamble of claim 1 is known from US—A—4 386 768. According to this known structure the axes of the four terminal pulleys for the upper and lower belts form the corners of an articulated parallelogram, and the upper and lower belts are moved away from each other by turning the elements on which corresponding ones of the upper and lower terminal pulleys are commonly mounted from an inclined to a more upright position, thus increasing the vertical distance of corresponding upper and lower belt pulleys causing the upper belt to become separated from the lower belt. The turning mechanism is relatively complicated and to each position thereof there is assigned a well-defined distance between the upper and lower belts.

It is an object of the present invention to provide an envelope delivery device which is simple and easily adjusts itself to different thicknesses of envelopes to be delivered.

This object is accomplished by an envelope delivery device as claimed in claim 1.

When the envelope is being carried by the envelope delivery device the upper delivery means is supported only by the envelope resting on the lower delivery means.

Irrespective of the thickness of envelopes, therefore, it is assured that they are sandwiched between the upper and lower delivery device for stable delivery, even when their surfaces are irregular.

A preferred embodiment of the invention will now be described with reference to the accompanying drawings in which:

Fig. 1 schematically shows the construction of the envelope depositing machine,

Fig. 2 is a plan view showing the envelope handling machine, which is partly cut out,

Fig. 3 is a sectional view taken along the line III—III in Fig. 2, and

Fig. 4 is a plan view showing the arrangement of various sensors.

In the embodiment to be described below, this invention is applied to the envelope-depositing machine.

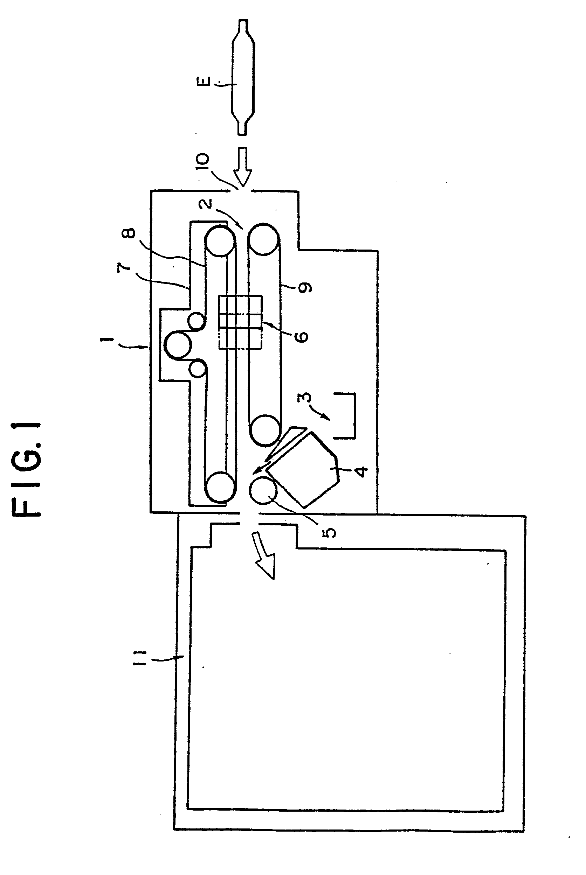

Referring to Fig. 1, the envelope-depositing machine is comprised of an envelope-handling machine 1 for giving deposit information to a deposit envelope E supplied into an inlet 10, and an envelope-accommodating device 11 for accommodating deposit envelopes, the processing of which is completed. The envelope-handling machine 1 includes a delivery device of a conveyer 2 for carrying the deposit envelope from the inlet 10 to the device 11, a printer 4 for printing the deposit information regarding the envelope supplied through the inlet 10 to one side of a label, a label feed device 3 for feeding on a delivery path of the delivery device 2, the label having the deposit information printed to one side and adhesives applied on the other side, an attitude control device 6 for allowing the center of the envelope to be in alignment with the center of the delivery path in the course of delivery and directing the envelope in the direction of delivery, and a roller 5 for sticking the fed label to the lower side of the carried envelope. The envelope to which the label is applied is fed into the accommodation device 11. The delivery device 2 includes upper belts 8 and lower belts 9, and is designed to carry the envelope, while it is sandwiched therebetween. The upper belts 8 are mounted on a supporting device 7, which is held for up and down movement.

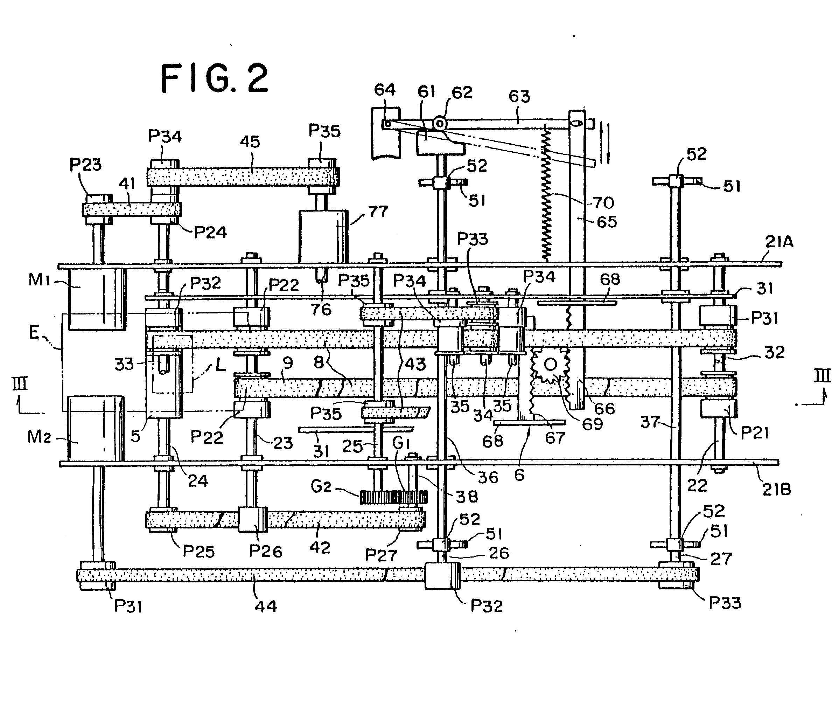

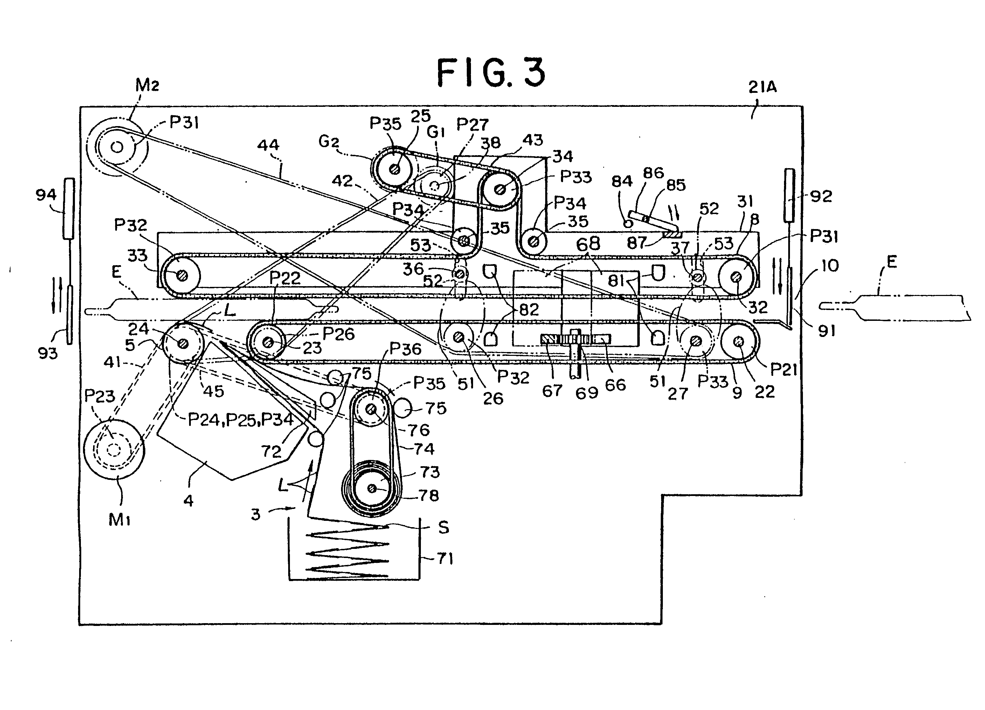

Referring to Figs. 2 and 3, the envelope handling machine 1 is provided with a pair of frames 21A and 21B which are interconnected with each other at a suitable interval by means of a connecting member (not illustrated). Between the frames 21A and 21B, there are rotatably supported rotary shafts 22, 23, 24, 25, 26 and 27. The rotary shaft 22 located in a position close to the inlet 10 is fixedly provided with two pulleys $P_{21}$, and the rotary shaft 23 located opposite thereto is fixedly provided with two pulleys $P_{22}$.

Between and around the pulleys $P_{21}$ and $P_{22}$, there are laid the lower belts 9. The roller 5 is fixed to the rotary shaft 24 located further in front of the rotary shaft 23, as viewed in the direction of delivery.

Between the frames 21A and 21B, there are positioned a pair of elevating plates 31 included in the supporting device 7, which are also interconnected with each other at a suitable interval by means of a connecting member (not illustrated). The elevating plates 31 are adapted to be guided by guide members (not shown) for up and down movement, and supported by cams 51 and cam followers 50, which will both be described later. Between the elevating plates 31, there are laid rotary shafts 32, 33, 34 and 35, which are rotatably supported in place. Supporting shafts 36 and 37 are fixed between the elevating plates 31. The rotary shafts 32 and 33 are fixedly provided with two pulleys $P_{31}$ and $P_{32}$, respectively, the upper belts 8 being laid between pulleys $P_{31}$ and $P_{32}$ and engaged therewith. The pulley $P_{32}$ and the roller 5 face vertically each other. The rotary shafts 34 and 35 are provided with pulleys $P_{33}$ and $P_{34}$, and a portion of the belts 8 projects upwardly beyond the pulleys $P_{34}$ into engagement with the pulleys $P_{33}$.

A delivery motor M1 of the delivery device 2 is fixed to the frame 21A. The rotary shaft 24 extends outwardly of the both frames 21A and 21B, and is fixedly provided at both its ends with pulleys $P_{24}$ and $P_{25}$. There is a portion of the rotary shaft 23 extending outwardly of the frame 21B, at which a pulley $P_{26}$ is fixed. The frame 21B supports rotatably at a portion somewhat above its central portion an outwardly extending rotary shaft 38, to which a pulley $P_{27}$ and a gear $G_1$ are fixed. The rotary shaft 25 is fixedly provided with two pulleys $P_{35}$. A portion of the rotary shaft 25 extends outwardly of the frame 21B, and is provided with a gear $G_2$ to mesh with the gear $G_1$. A belt 41 is laid between and around the pulley $P_{23}$ fixed to the output shaft of the motor M1 and the pulley $P_{24}$ of the rotary shaft 24. A belt 42 is laid among and around the pulleys $P_{25}$, $P_{26}$ and $P_{27}$. Furthermore, belts 43 are also laid between and around the pulley $P_{35}$ and $P_{33}$. The aforesaid arrangement causes the upper and lower belts 8 and 9 and the roller 5 to be driven in synchronism by the motor M1.

Both ends of the rotary shaft 26 extend outwardly of the frames 21A and 21B, and are fixedly provided with oval cams 51. Similarly, both ends of the rotary shaft 27 are fixedly provided with cams 51. The shafts 26 and 27 are fixedly provided with pulleys $P_{32}$ and $P_{33}$ at the ends projecting outwardly of the frame 21B. A motor M2 is designed to drive the elevating plate 31 having the upper belts 8 for up and down movement, and is mounted on the frame 21B with the output shaft being provided with a pulley $P_{31}$. A belt 44 is laid among and around the pulleys $P_{31}$, $P_{32}$ and $P_{33}$. On the other hand, the elevating plates 31 include supporting shafts 36 and 37, which project outwardly of the elevating plates 31, and extend further outwardly of the frames 21A and 21B through vertically elongate openings 53 formed on the frames 21A and 21B. The supporting shafts 36 and 37 are provided at both ends with cam followers 52, which rest on the peripheral edges of cams 51. Consequently, the rotary shafts 26 and 27 as well as the cams 51 are rotated through a belt 44 by driving the motor M2, and the elevating plates 31 (the supporting device 7) are moved up and down by up and down movement of the cam followers 52 resting on the cams 51. As a result, the upper belts 8 are lifted up and down, and are thus moved toward and away from the lower belts 9.

The attitude control device 6 for the deposit envelopes includes positioning plates 68, which each are fixed to one ends of racks 66 and 67. The racks 66 and 67 mesh with each other through an associated pinion 69. The positioning plates 68 are located outside of the upper and lower belts 8 and 9 and are done at the same height position as a delivery path defined by the upper and lower belts 8 and 9. A lever 65 extends outwardly from one rack 66 through an opening formed in the frame 21A. The lever 65 is provided in the outer end with an elongate opening, into which a pin formed at one end of a lever 63 is fitted so as to connect the levers 65 with 63. The lever 63 is pivotally fixed at the other end to a mounting member fixed to the frame 21A. In the vicinity of the aforesaid other end of the lever 63, there is a cam follower 62. On the other hand, there is a cam 61 mounted at the end of the rotary shaft 26, which extends outwardly from the frame 21A. The lever 63 is energized by a tension spring 70 so as to allow the cam follower 62 to constantly contact the cam surface of the cam 61. The racks 66 and 67 are supported by the associated supporting members (not illustrated) for longitudinal movement, while the pinion 69 is rotatably supported by the associated supporting member (not shown).

Driving of the Motor M2 causes rotation of the rotary shafts 26 to move the cam follower 62 along the cam 61 and move the rack 66 in its longitudinal direction through the levers 63 and 65. Movement of the rack 66 is transmitted to other rack 67 through the pinion 69. As mentioned above, driving of the motor M2 causes up and down movement of the elevating plates 31 through the cams 51 and the cam followers 52. The racks 66 and 67 are driven in such a manner that, when the elevating plates 31 ascend, the positioning plates 68 move toward each other.

The label feed device 3 is equipped with a storing box 71, a peeling and guiding plate 72 disposed in opposition to the printer 4, a support sheet take-up roller 73, a pulley $P_{36}$ and auxiliary rollers 75 disposed at suitable positions.

A pulley $P_{34}$ is fixed to the rotary shaft 24 driven by the driving motor M1. An input shaft of a clutch 77 secured to the frame 21A is also fixedly provided with a pulley $P_{35}$, and a belt 45 is laid between and around the pulleys $P_{34}$ and $P_{35}$. The pulley $P_{36}$ is fixed to the output shaft 76 of the clutch 77. The roller 73 is secured to a rotary shaft 78 rotatably interposed between the frames 21A and 21B, and a belt 74 is laid between and around the pulley $P_{36}$ and a portion of the roller 73. The guiding plate 72 is obliquely disposed with its end portion being gradually decreased in thickness and being located between the roller 5 and the pulley $P_{22}$. Labels L have pressure-sensitive adhesives applied on one sides thereof, which are adhered to a support sheet S at regular intervals. A portion of the support sheet S having labels L is within the storing box 71, and the support sheet S passes between the guiding plate 72 and the printer 4, is turned down at the leading end of the guiding plate 72, passes through the pulley $P_{36}$, and is wound around the roller 73.

When the leading end of the envelope E carried on the delivery path defined between the belts 8 and 9 approaches the vicinity of the roller 5, the clutch 77 is actuated to drive the roller 73, whereby winding-up of the support sheet S is initiated. The label L, to which deposit information has already been printed by the printer 4, is fed toward the leading end of the guiding plate 72, as winding-up of the support sheet S proceeds. When a portion of the support sheet S having the label L is turned down at the leading end of the guiding plate 72, such label L is peeled out of the support sheet S, and is fed in between the envelope E and the roll 5. Since the envelope E and the label L are sandwiched under pressure (or clamped) between the roll 5 and the pulleys $P_{32}$ and the belts 8, the label L is adhered to the lower side of the envelope E through the pressure-sensitive adhesives.

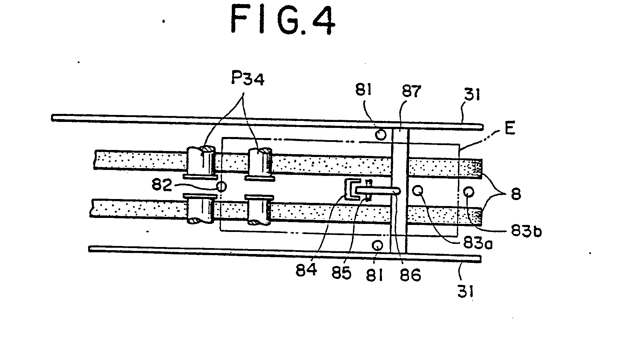

In order to inhibit entrance of any oversized or undersized envelope, provision is made of thickness, length and width sensors. Referring to Fig. 4, the thickness sensor is comprised of a lever 86 pivotally fixed to a shaft 85 interposed between the frames 21A and 21B, an operable member 87 adapted to terminate within the elevating plates 31 and receive one end of the lever 86, and a photosensor fixed to a mounting member mounted on the frames 21A and 21B for sensing the other end of the lever 86. The elevating plate 31 ascends to a certain height or more with ascent of said one end of the lever 86 and descent of said other end thereof, whereby the light passage of the photosensor 84 is cut off by the aforesaid other end. Thus, the thickness of the envelope E is judged as being more than prescribed. The length sensor is comprised of photosensors 82, 83a and 83b arranged in such a manner that light passes vertically through the middle portion between the left and right belts 8. Using the position of the sensor 82 as the reference, the sensor 83a is located in a position within the range of the envelope's length allowed, while the sensor 83b is located in a position spaced away therefrom by a length longer than said envelope's length. If the sensor 83a senses the envelope E and the sensor 83b does not, when the sensor 82 senses one end of that envelope, it is judged as having a suitable length, but, if it is not the case, it is judged as having an unsuitable length. The width sensor is comprised of left and right photosensors 81 which are disposed at places inside of the elevating plates 31 and in the vicinity thereof, and are arranged in such a manner that light passes vertically. Unless the sensors 81 sense the envelope E after it has been centered by the attitude control device 6, the envelope is then judged as having a suitable width.

In Fig. 3, shutters 91 and 93 each are provided in the position of the inlets 10 for envelopes and at the place where the envelopes are fed from the machine 1 into the device 11, respectively, said shutters being designed to be opened and closed by solenoids 92 and 94, respectively.

The envelope-handling machine 1 as constructed above operates in the following manner.

The driving motor M2 is driven by an initiation command from the envelope-depositing machine, whereby the elevating plates 31 ascend to hold the upper belts 8 in an ascending position. Then, the shutter 91 is also opened. Upon insertion of the envelope E into the inlet 10, this is sensed by an insertion-detecting sensor (not shown) disposed in the inlet 10. Thereupon, the motor M2 is again driven to lower the elevating plates 31. The cam 51 is rotated to an angular position which allows the cam followers 52 to be lowered to the lowermost position. The elevating plates 31 and the upper belts 8 are brought to a state where they are supported by the envelope E resting on the lower belts 9. Generally, the cam followers 52 are spaced away from the cams 51. As the motor M1 and hence the upper and lower belts 8 and 9 are driven, the envelope E is carried, while it is sandwiched between the upper and lower belts 8 and 9. If the envelope E has a thickness more than prescribed, the delivery motor M1 is reversed to return it to the inlet 10, since the signal to that effect is sent out of the thickness-detecting sensor. The same also holds for the case where the envelope E has a length more than prescribed.

The delivery motor M1 stops upon the envelope E being carried to the position of the attitude control device 6. The motor M2 is then driven to elevate the elevating plates 31. Some gap appears between the envelope and the upper belts 8. The positioning plates 68 are moved toward the center by driving of the motor M2 to give pushes to both sides of the envelope, whereby centering of the envelope is effected. The center of the envelope in the widthwise direction is in coincidence with that of the delivery path in the widthwise direction, while the longitudinal direction of the envelope is parallel with the delivery direction. At this time, the width of the envelope is also checked. If any, unsuitable envelopes are then returned.

The elevating plates 31 are again lowered, and the elevating plates 31 and the upper belts 8 rest and are supported on the envelope E. Then, the motor M1 is again driven, whereby the envelope is carried, while it is sandwiched or clamped between the both belts 8 and 9.

In the meantime, deposit information is printed on the surface of the next label L on the support sheet S on the basis of the data sent from the envelope-depositing machine. Upon the leading end of the envelope reaching above the printer 4, the clutch is then put in operation, so that initiation of rolling of the support sheet S around the roll 73 takes place. In operative association of rolling-up of the support sheet S, the label L having deposit information printed thereon is fed toward the leading end of the guide plate 72, and is peeled from the support sheet S, as mentioned in the foregoing. While the label L peeled from the support sheet S moves along the lower side of the envelope E, the envelope with the lavel L is sandwiched under pressure between the pulleys $P_{32}$ and upper belts 8 and the roller 5, whereby the label L is sticked to the envelope E. Thereafter, the shutter 93 is opened to feed the envelope with the label L attached thereto into the envelope-accommodating device 11.

## Claims

1. An envelope delivery device including
a pair of upper and lower delivery means (8, 9) arranged along a delivery direction, driven in synchronism and adapted to sandwich therebetween a deposit envelope (E) to be carried for delivery,
an elevating plate (31) provided with said upper delivery means (8),
means for guiding an upward and downward movement of said elevating plate (31) together with the upper delivery means (8) provided thereon, and
first driving means (51, 52) causing the upward and downward movement of said elevating plate,
characterized in that
the guiding means are provided by supporting shafts (36, 37) fixed to the elevating plate (31) and guided in straight-line openings (53) provided in a stationary frame (21A, 21B) so that said upper delivery means (8) is supported only by the deposit envelope (E) resting on the lower delivery means (9) when said elevating plate (31) is in a lowered position.

2. An envelope delivery device as claimed in claim 1, characterized in that said first driving means comprises
a cam (51) rotatably mounted on said stationary frame (21A, 21B) of the device,
means (M2) for rotating said cam (51), and
a cam follower (52) mounted on said elevating plate (31) and adapted to rest on the cam surface of said cam (51).

3. An envelope delivery device as claimed in claim 1 or 2, characterized by further including means (6) disposed in a delivery path defined by said upper and lower delivery means (8, 9) for controlling the attitude of the deposit envelopes (E) carried along the delivery direction.

4. An envelope delivery device as claimed in claim 3, characterized in that said attitude control means (6) comprises positioning plates (68) disposed at both sides of said delivery path and second driving means (66, 67, 69) for driving said positioning plates (68) to be simultaneously moved towards or away from each other in the width direction of said delivery path.

5. An envelope delivery device as claimed in claim 4, characterized in that said first driving means (51, 52), is adapted to operatively cooperate with said second driving means (66, 67, 69), and said positioning plates (6) are adapted to move towards each other when said elevating plate (31) ascends.

## Patentansprüche

1. Umschlagzuführungsvorrichtung mit
einem Paar von oberen und unteren Zuführungsmitteln (8, 9), welche längs einer Zuführungsrichtung angeordnet sind, synchron angetrieben werden und so eingerichtet sind, daß sie einen für eine Zuführung zu befördernden Einlageumschlag (E) dazwischen aufnehmen können,
einer mit den oberen Zuführungsmitteln (8) versehenen Hubplatte (31),
Mitteln zum Führen einer Aufwärts- und Abwärtsbewegung der Hubplatte (31) zusammen mit den darauf vorgesehenen oberen Zuführungsmitteln (8), und
ersten Antriebsmitteln (51, 52), welche die Aufwärts- und Abwärtsbewegung der Hubplatte bewirken,
dadurch gekennzeichnet, daß
die Führungsmittel durch Trägerschäfte (36, 37) vorgesehen sind, die an der Hubplatte (31) angebracht und in in einem stationären Rahmen (21A, 21B) vorgesehenen geradlinigen Öffnungen (53) geführt sind, so daß die oberen Zuführungsmittel (8) nur durch den auf den unteren Zuführungsmittel (9) aufruhenden Einlageumschlag (E) abgestützt werden, wenn sich die Hubplatte (31) in einer abgesenkten Stellung befindet.

2. Umschlagzuführungsvorrichtung nach Anspruch 1, dadurch gekennzeichnet, daß die ersten Antriebsmittel
einen drehbar auf dem stationären Rahmen (21A, 21B) der Vorrichtung angebrachten Nocken (51),
Mittel (M2) zum Drehen des Nockens (51), und
einen auf der Hubplatte (31) angebrachten und für ein Aufruhen auf der Nockenfläche des Nockens (51) eingerichteten Nockenfolger (52) umfassen.

3. Umschlagzuführungsvorrichtung nach Anspruch 1 oder 2, dadurch gekennzeichnet, daß sie ferner in dem durch die oberen und unteren Zuführungsmittel (8, 9) definierten Zuführungsweg angeordnete Mittel (6) zur Steuerung der Lage der längs der Zuführungsrichtung transportierten Einlageumschläge (E) enthält.

4. Umschlagzuführungsvorrichtung nach Anspruch 3, dadurch gekennzeichnet, daß die Lagesteuermittel (6) an beiden Seiten des Zuführungsweges angeordnete Positionierplatten (68) und zweite Antriebsmittel (66, 67, 69) zum Antreiben der Positionierplatten (68) derart, daß sie in der Breitenrichtung des Zuführungsweges gleichzeitig aufeinander zu und voneinander weg bewegt werden, umfassen.

5. Umschlagzuführungsvorrichtung nach Anspruch 4, dadurch gekennzeichnet, daß die ersten Antriebsmittel (51, 52) so eingerichtet sind, daß sie mit den zweiten Antriebsmitteln (66, 67, 69) zusammenarbeiten und daß die Positionierplatten (6) so eingerichtet sind, daß sie sich aufeinander zu bewegen, wenn die Hubplatte (31) hochgeht.

## Revendications

1. Un dispositif d'amenée d'enveloppes comprenant:

— une paire de moyens supérieurs et inférieurs d'amenée (8, 9), disposés le long d'une direction d'amenée, entraînés en synchronisme et conçus pour prendre en sandwich une enveloppe de dépôt (E) à entraîner pour l'amenée,

— une plaque relevable (31) pourvue desdits moyens d'amenée supérieurs (8),

— des moyens pour guider un mouvement vers le haut et vers le bas de ladite plaque relevable (31) en même temps que les moyens d'amenée supérieurs (8) dont elle est pourvue, et

— des premiers moyens d'entraînement (51, 52) provoquant le mouvement vers le haut et vers le bas de ladite plaque relevable,

caractérisé en ce que les moyens de guidage sont pourvus d'arbres supports (36, 37) fixés à la plaque relevable (31) et guidés dans des ouvertures rectilignes (53) formées dans un châssis fixe (21A, 21B) de sorte que lesdits moyens d'amenée supérieurs (8) ne soient supportés que par l'enveloppe de dépôt (E) reposant sur les moyens d'amenée inférieurs (9) lorsque ladite plaque relevable (31) est en position abaissée.

2. Le dispositif d'amenée d'enveloppes de la revendication 1, caractérisé en ce que lesdits premiers moyens d'entraînement comprennent:

— une came (51) montée à rotation sur ledit châssis fixe (21A, 21B) du dispositif,

— des moyens (M2) pour entraîner en rotation cette came (51), et

— un galet de came (52) monté sur la plaque relevable (31) et disposé de manière à reposer sur la surface de came de cette came (51).

3. Le dispositif d'amenée d'enveloppes de l'une des revendications 1 ou 2, caractérisé en ce qu'il comprend en outre des moyens (6), disposés dans un trajet d'amenée défini par lesdits moyens d'amenée supérieurs et inférieurs (8, 9), pour contrôler l'orientation des enveloppes de dépôt (E) transportées de la direction d'amenée.

4. Le dispositif d'amenée d'enveloppes de la revendication 3, caractérisé en ce que lesdits moyens de contrôle d'orientation (6) comprennent des plaques de positionnement (68) disposées des deux côtés du trajet d'amenée, et des seconds moyens d'entraînement (66, 67, 69) pour entraîner ces plaques de positionnement (68) de manière à les déplacer simultanément en rapprochement ou en éloignement l'une de l'autre dans la direction de la largeur dudit trajet d'amenée.

5. Le dispositif d'amenée d'enveloppes de la revendication 4, caractérisé en ce que lesdits premiers moyens d'entraînement (51, 52) sont conçus de manière à coopérer, dans leur fonctionnement, avec lesdits seconds moyens d'entraînement (66, 67, 69), et en ce que lesdites plaques de positionnement (6) sont conçues de manière à se déplacer en rapprochement l'une de l'autre lorsque ladite plaque relevable (31) se soulève.

# FIG.1

0 164 649

FIG.2

# FIG. 3

0 164 649

# FIG. 4